(19) Europäisches Patentamt / European Patent Office / Office européen des brevets

(11) **EP 2 827 660 A1**

(12) **EUROPEAN PATENT APPLICATION**

(43) Date of publication:
**21.01.2015 Bulletin 2015/04**

(51) Int Cl.:
*H04W 56/00* (2009.01)

(21) Application number: **13306021.0**

(22) Date of filing: **16.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT
92100 Boulogne-Billancourt (FR)**

(72) Inventors:
• **Schaich, Frank
70435 Stuttgart (DE)**

• **Wild, Thorsten
70435 Stuttgart (DE)**

(74) Representative: **2SPL Patentanwälte PartG mbB
Postfach 15 17 23
80050 München (DE)**

Remarks:
Amended claims in accordance with Rule 137(2) EPC.

(54) **Mobile terminal and base station**

(57)     Embodiments relate to a mobile terminal (420). The mobile terminal includes an estimator (422) which is operable to determine, at the mobile terminal (420), an estimate of a timing advance (TA) for a transmission from the mobile terminal (420) to a base station (410) based on a broadcast signal (430) from said base station (410). Further, embodiments relate to a base station (410) for cell of a cellular communication system. The base station (410) comprises a transmitter (412) which is operable to broadcast a broadcast signal (430) including information indicative of a size of the cell.

Fig. 4

EP 2 827 660 A1

**Description**

Embodiments generally relate to mobile communication systems and, more particularly to the determination of a timing advance value for uplink communication.

**Background**

Future communication networks, such as 5$^{th}$ Generation (5G) mobile communication systems, for example, may have to deal with a broad range of services. For example, there are delay critical services such as voice and video. Moreover, there are background services, such as tickers or weather applications, email browsers, etc., which may be less delay critical but frequently generate low amounts of traffic. On top of that there are sensor applications, e.g. Machine-to-Machine (M2M) communication, for collecting data. For example, household meters can be read using M2M communications. Therefore there may be a desire to support more diverse services in a communication network. That is to say, in the wake of the internet of things future communication networks presumably will have to handle many more devices than today's communication networks, as many low-cost sensors may be around using a cellular network as means to share their data. Thus, many more devices would have to be time- and frequency-aligned compared to today.

Today, in mobile communication systems or cellular networks time and/or frequency synchronization is typically done via ranging protocols, also referred to as closed-loop synchronization, which are time- and resource-consuming. For example, in 2$^{nd}$ Generation (2G) systems, like the Global System for Mobile communication (GSM), a mobile terminal sends its data three time slots after it received the data from a base station in DownLink (DL). This is good as long as the distance between the mobile terminal and the base station is small, but increasing distance requires consideration of propagation delay as well to keep UpLink (UL) communication synchronized at the base station. To handle this, a so-called Timing Advance (TA) is conveyed by the network to the mobile terminal. Thereby the timing advance value may be interpreted as the length of time a signal takes to reach the base station from a mobile terminal. The base station calculates the first TA when it receives the UL Random Access Channel (RACH), reports it to its Base Station Controller (BSC), and passes it to the mobile terminal. In current 4$^{th}$ Generation (4G) systems, like Long Term Evolution (LTE), when a mobile terminal wishes to establish a Radio Resource Control (RRC) connection with a base station, it transmits a random access preamble to enable the base station to estimate the transmission timing of the mobile terminal based on this. Now, the base station transmits a random access response which comprises a timing advance command, based on which the mobile terminal may adjust the mobile terminal's transmit timing for UL communication, i.e. in the direction from the mobile terminal to the base station.

Such closed-loop synchronization procedures as described above are feasible as long as the number of devices connecting to the network is not too big. However, with the number of mobile devices growing, a signaling overhead due to message exchange will increase accordingly, eating up precious resources. Further, sensor devices will need to have battery life-cycles which are much longer than today's smart phones. So, energy wasting protocol based ranging procedures are to be prevented. Also, protocol based closed-loop procedures typically introduce higher latencies. Particular use cases of the future internet may require much lower latencies (e.g. online gaming, car2car communications, etc.) making such approaches unfeasible.

As the range of service traffic shapes is growing, different types of traffic and devices may be distinguished, for example. These types of traffic and devices may be supported by a future (cellular) mobile communication system. A first type of traffic may be referred to as "Bitpipe", and it may correspond to a highly spectrally efficient traffic with large data volumes and low latency. Another traffic type may be sporadic machine-type communication with small packet sizes, for example, caused by smart phone applications (apps) pulling for updates or providing small status information, supporting also low latency data transport. Another traffic type may be energy-efficient traffic, thus battery-saving sensor data. This data may be more tolerant to high latencies than the other ones.

For example, the first type of traffic may be delivered highly synchronous applying conventional closed-loop synchronization procedures. However, the bulk of the transmissions (in terms of quantity not in terms of aggregate data rate, e.g. low rate M2M transmissions, sensor transmissions, etc.) need not be bothered with resource consuming closed-loop synchronization procedures as outlined above, but instead are to perform open-loop synchronization. In such open-loop synchronization procedures mobile devices may measure their off-sets via DL preambles and apply those measurements to their UL data transmissions. No feedback loop to the base station is required. Thereby a DL preamble is a defined sequence of symbols known by the receiver, i.e. the mobile terminal, used for synchronization and/or equalization. The mobile device "wakes up" from sleep mode already some time before intended data transmission, listens to the downlink synchronization or pilot channel in order to get some initial synchronization to DL based on the DL structure. No costly feedback loop is required. However, synchronization cannot be done perfectly, as the propagation delay to the base station cannot be measured this way and thus remains introducing signal distortions such as Inter-Carrier Interference (ICI) for Multi-Carrier based systems, such as Orthogonal Frequency-Division Multiplexing (OFDM) or Filter Bank Multi Carrier (FBMC). With open-loop synchronization these residual delays are typically higher than with closed-loop synchronization schemes.

## Summary

Embodiments may be based on the finding that it may be better to apply an inaccurate timing advance value to an open-loop synchronized mobile terminal in order to obtain an inaccurate synchronization of uplink signals at a base station when compared to not applying a timing advance value at all.

Without the application of timing advance at the mobile terminal, the range of delays of roughly open-loop synchronized transmissions (based on DL preambles) relative to precisely closed-loop synchronized transmissions (based on closed-loop synchronization procedures) is within [0 ... $T_{max}$], with $T_{max}$ being the highest occurring round trip time occurring within a cell.

The inventors have found that it may be better for at least some wireless communication systems to have a second (open-loop synchronized) mobile terminal being delayed at the base station with respect to a first (closed-loop synchronized) mobile terminal between [$-T_1, T_2$] instead of between [0, $T_{max}$], with $T_1 + T_2 = T_{max}$. This may be achieved by estimating and applying a timing advance value at the mobile terminal side based on a broadcast signal of at least the associated base station.

Hence, according to a first aspect, embodiments provide a mobile terminal for a wireless communication system. The mobile terminal comprises an estimator which is operable or configured to determine, at the mobile terminal, an estimate of a timing advance value for a transmission from the mobile terminal to a base station (i.e., for the uplink direction). Thereby the estimate of the timing advance value may be determined based on a broadcast signal from the base station.

According to a further aspect, embodiments also provide a method for a mobile terminal. The method comprises determining, at the mobile terminal, an estimate of a timing advance for a transmission from the mobile terminal to a base station based on a broadcast signal from the base station.

Embodiments may provide improved open-loop synchronization and generate less interference from open-loop synchronized (roughly synchronized) traffic to highly closed-loop synchronized (highly synchronized) traffic.

The mobile terminal may comprise transceiver circuitry for receiving and/or transmitting radio signals, which may be organized in repetitive radio frames. A radio frame may be further subdivided in sub-frames. The transceiver circuitry may be compliant to the wireless communication system and it may comprise typical components of a transceiver, such as one or more antennas, a Low Noise Amplifier (LNA), one or more filters, one or more mixers, one or more converters, etc. In some embodiments the transceiver or parts thereof may be implemented using software being executed on accordingly adapted hardware, such as a Digital Signal Processor (DSP), an Application-Specific Integrated Circuit (ASIC), a Central Processing Unit (CPU), a general purpose processor, etc. Moreover the transceiver may be implemented using one or more devices, one or more modules, or one or more units operable to receive.

In embodiments the mobile terminal may correspond to a smartphone, a cell phone, User Equipment (UE), a laptop, a notebook, a personal computer, a Personal Digital Assistant (PDA), a Universal Serial Bus (USB) -stick, a car, a sensor device, etc. The mobile terminal may also be referred to as UE or user in line with the 3rd Generation Partnership Project (3GPP) terminology.

According to yet a further aspect, embodiments also provide a base station for cell of a wireless or cellular communication system. The base station comprises a transmitter which is operable or configured to broadcast a broadcast signal comprising information indicative of a size of the cell.

The base station may as well comprise corresponding transceiver circuitry and can be located in the fixed or stationary part of the wireless communication system. The base station may correspond to a remote radio head, a transmission point, an access point, a macro cell, a small cell, a micro cell, a femto cell, a metro cell etc. The base station can be a wireless interface of a wired network, which enables transmission and reception of radio signals to the mobile terminal. Such a radio signal may comply with radio signals as, for example, standardized by 3GPP, or, generally, in line with one or more of the following listed systems. Thus, the base station may correspond to a NodeB, an eNodeB, a BTS, an access point, etc.

The wireless communication system may, for example, correspond to future or present wireless communication systems, for example standardized by 3GPP, as the Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms wireless communication system and mobile communication network are used synonymously. In particular, the wireless communication system may be a cellular communication network. A cellular network or mobile network is a radio network distributed over land areas called cells, each served by at least one fixed-location transceiver, known as a cell site or base station. Thereby each base station has a unique cell identifier (Cell ID).

Embodiments may be particularly suited well suited for Filter Bank Multi Carrier (FBMC) systems. In an FBMC system a time continuous data symbol of subcarrier $k$ may be expressed as

$$s_k(t) = \sum_n s_k[n]\delta(t - nT),$$

(1)

where $s_k[n]$ are discrete subcarrier data symbols, k is a subcarrier index, and $T$ is a symbol time spacing. The difference between OFDM and FBMC lies in the choice of T and transmitter and receiver prototype filters $p_T(t)$ and $p_R(t)$, respectively (see below). In a conventional OFDM, $p_T(t)$ is a rectangular pulse of height one and width T. The receiver prototype filter $p_R(t)$ is also a rectangular pulse of height one, but its width is reduced to $T_{FFT} < T$, where $T_{FFT}$ = 1/B, and B is the frequency spacing between subcarriers. In the presence of a channel, each transmitted tone will undergo a transient before reaching a steady state. To accommodate the transient period, the duration of $p_T(t)$ is extended by an interval greater than the duration of the channel impulse response, and at the receiver, $p_R(t)$ is time aligned with the transmitted tone after it has reached steady state. In OFDM the duration of $p_T(t)$ is extended by the process of adding a cyclic prefix (CP) to each OFDM symbol.

In FBMC systems that may be designed for maximum bandwidth efficiency, T = $T_{FFT}$ = 1/B, however, the durations of $p_T(t)$ and $p_R(t)$ are greater than T (usually, an integer multiple of $T$). Hence, in FBMC, successive data symbols overlap; no cyclic prefix is required. To summarize, in FBMC, a set of parallel data symbols $s_k[n]$ are transmitted through a bank of modulated filters, and, thus, a transmit signal x(t) may be synthesized according to

$$x(t) = \sum_n \sum_{k \in \mathcal{K}} s_k[n]\, p_T(t - nT)e^{j2\pi(t - nT)f_k},$$

(2)

The difference between OFDM and FBMC lies in the choice of the prototype filters $p_T(t)$ and $p_R(t)$.

Embodiments preferably but not exclusively relate to systems not using a cyclic prefix, but are relying on FBMC solutions instead, which are strong candidates for future generations of wireless networks. For FBMC based systems distortions arising at the base station from delays between user transmissions are symmetric to the case of no delay (in contrast to systems applying a cyclic prefix). Hence, the mobile terminal may be operable or configured to communicate with the base station using a FBMC technique not using a cyclic prefix.

The broadcast signal from the base station may be a downlink signal designed for simultaneous delivery to multiple users (mobile terminals) in a specified area served by the base station. This area may be referred to as cell. Hence, the term cell refers to a coverage area of radio services provided by the base station, which may be a transmission point, a remote unit, a remote head, a remote radio head, a base station transceiver or a NodeB, an eNodeB, etc. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile terminal can be registered or associated with a cell, i.e. it can be associated to a cell such that data can be exchanged between the network and the mobile in the coverage area of the associated cell using a dedicated channel, link or connection. Thereby a cell may be characterized by a Cell ID which is a generally unique number used to identify each base station or cell.

In some embodiments the broadcast signal may be indicative of a size of a cell served by the base station. Thereby the size of the cell may be indicated in various ways which will be described in the sequel. The mobile terminal's estimator may in this case be operable or configured to determine the estimate of the timing advance based on the indicated cell size. Information on cell size conveyed by the cell's broadcast signal may be a cell size being selected from a predefined set of different cell sizes, a quantity indicative of a maximum signal propagation delay measured by the base station during closed-loop synchronization procedures of the base station with other mobile terminals served by the cell, or a quantity indicative of a transmission power of the base station used for the broadcast signal, according to alternative or complementary embodiments.

Alternatively or additionally the mobile terminal's estimator may be operable or configured to determine the estimate of the timing advance based on received handover measurement signals of a cell served by the base station and one or more neighboring cells. In this way no new information related to cell sizes or the like need to be added to conventional broadcast signals.

These and other features, aspects, and advantages of the present invention will become better understood with reference to the following description and claims.

**Brief description of the Figures**

Some embodiments of apparatuses and/or methods will be described in the following by way of example only, and with reference to the accompanying figures, in which

Fig. 1    illustrates a frame structure including highly closed-loop synchronized traffic and roughly open-loop synchronized traffic;

Fig. 2    illustrates interference generated from roughly open-loop synchronized traffic to highly closed-loop synchronized traffic;

Fig. 3    illustrates roughly open-loop synchronized traffic delays relative to highly closed-loop synchronized traffic without applying embodiments;

Fig. 4    illustrates an embodiment of a mobile terminal configured to estimate a timing advance value at the mobile terminal base on a broadcast signal and illustrates an embodiment of a base station configured to provide the broadcast signal; and

Fig. 5    illustrates roughly open-loop synchronized traffic delays relative to highly closed-loop synchronized traffic with applying embodiments.

**Detailed Description**

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

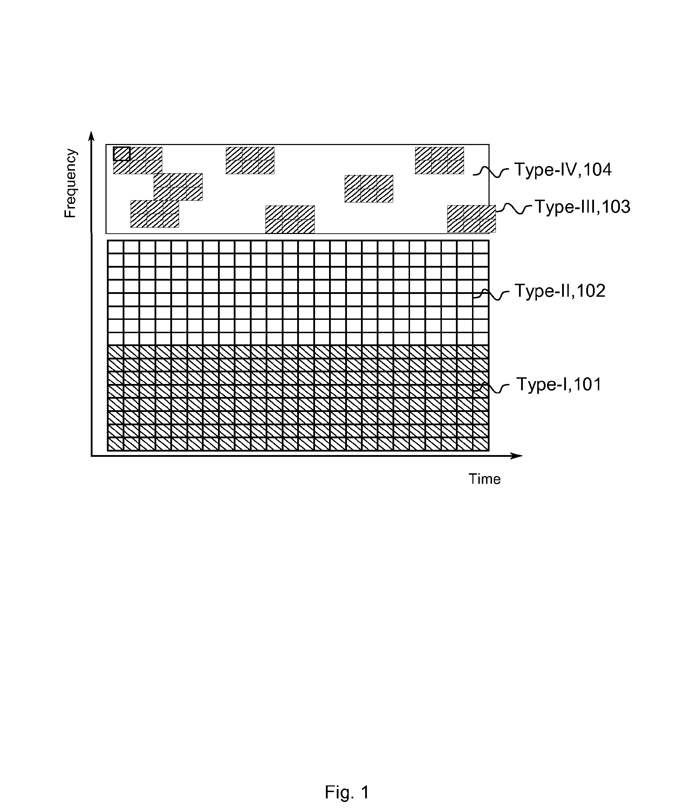

Fig. 1 shows an embodiment of a frame structure 100 used for communication between a base station and a mobile terminal of a mobile communication system according to an embodiment. The illustrated frame structure 100 combines various data traffic types 101 to 103.

Fig. 1 illustrates a time-frequency arrangement of physical radio resources which may be subdivided into physical time and frequency resources, as is generally known from multicarrier systems. Fig. 1 shows a time axis to the right and a frequency axis to the top. Moreover, Fig. 1 illustrates the four types of data traffic, namely 101 (Type I), 102 (Type II), 103 (Type III) and 104 (Type IV).

Type I data traffic 101 may correspond to higher amounts of data traffic or data packets, which are delay critical. Therefore Type I data traffic may correspond to closed-loop synchronized traffic in which a timing advance for uplink communication is measured at the base station and then communicated to the respective mobile terminal, for example, during an uplink random access procedure. That is to say, Type I denotes the resource area for highly synchronous bit-pipe traffic applying closed-loop synchronization like Long-Term Evolution (LTE) today, i.e. also employing orthogonality between subcarriers. Type II data traffic 102 may also correspond to higher amounts of delay critical data traffic or data packets, however, in contrast to Type I with open-loop synchronization. Furthermore, no orthogonality between subcarriers is needed for Type II. Type III data traffic 103 may correspond to smaller packets which are, at least to some extent, delay critical, such as e.g. low rate M2M transmissions. Type IV traffic 104 may correspond to data traffic, which is not delay critical and which may be spread over multiple radio frames, such as sensor transmissions. Hence, Type III and IV may comprise M2M and/or sensor traffic for which (accurate) closed-loop synchronization may not be applied and instead applies (coarse) open-loop synchronization. No orthogonality between subcarriers is needed for Type III and IV.

That is to say, a bulk of data traffic (Type II, Type III, and Type IV) may be based on open-loop synchronization, i.e. there is no closed synchronization loop between mobile terminal and base station. For Type II, Type III, and Type IV data traffic mobile terminals may measure their offsets via DL preambles, for example, and apply those measurements to their UL data transmissions. A mobile terminal may wake up from sleep mode already some time before intended data transmission, listen to a downlink synchronization or pilot channel in order to get some initial time and/or frequency synchronization based on the downlink frame structure. For example, a Primary Synchronization Signal (PSS) and a Secondary Synchronization Signal (SSS) as known from LTE may be used for this.

For Type II, Type III and Type IV data traffic no costly feedback loop to the base station is required. However, for Type II to Type IV data traffic synchronization cannot be done perfectly, as the propagation or round trip delay between base station and mobile terminal cannot be measured this way and thus remains introducing signal distortions such as Inter-Carrier Interference (ICI) in a multicarrier communication system. With open-loop synchronization these residual relative delays between the uplink signals of different mobile terminals are typically higher than with closed-loop synchronization schemes.

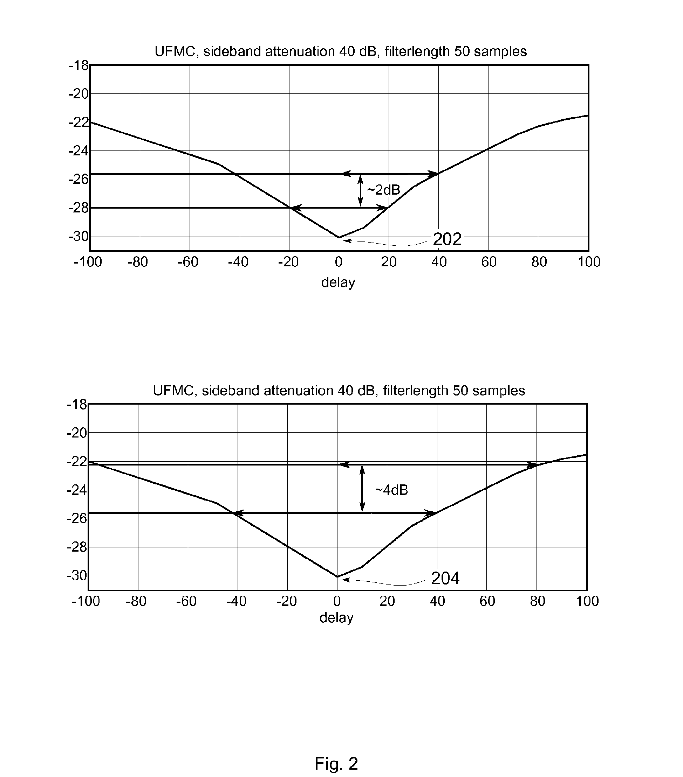

So, delay compensation in time domain per mobile terminal at the base station may need to be applied, which would be demanding in case of OFDM systems, but may be highly suitable for FBMC systems. On the other side, highly synchronized Type I data traffic of different users, applying closed-loop synchronization as stated above, may be detected at the base station via a common detection window. When doing so the range of delays of the roughly synchronized transmission Types II, III, and IV relative to the precisely synchronized transmission Type I is within $[0 \ldots T_{max}]$, with $T_{max}$ being the highest occurring round trip time occurring within the cell. This is not optimal in terms of generated inter-carrier interference as will be outlined referring to Fig 2.

For obtaining the graphs/curves of Fig. 2 a Universal Filtered Multi-Carrier (UFMC) concept has been simulated with $N$=1024 subcarriers, which are filtered on a frequency block level, respectively, to obtain higher bandwidth efficiency compared to OFDM concepts. Thereby UFMC denotes a generalized (universal) version of FBMC. Two mobile terminals have been simulated each using 36 subcarriers for carrying data. The resource allocations of both mobile terminals are adjacent in frequency. One mobile terminal is perfectly closed-loop synchronized while the other is delayed (x-axis) due to only coarsely open-loop synchronized transmission. A single Physical Resource Block (PRB), i.e., a fraction being filtered, exemplarily comprises 12 subcarriers (as in LTE). As FBMC prototype filters $p_T(t)$ and $p_R(t)$ Chebyshev filters with sideband attenuation 40dB and a filter length of 50 samples have been used. Chebyshev filters are analog or digital filters having a steeper roll-off and more passband ripple (type I) or stopband ripple (type II) than Butterworth filters, which would also be an option for the prototype filters $p_T(t)$ and $p_R(t)$. Fig. 2 depicts the interference power (Mean Squared Error in [dB]) the Type I synchronous user is suffering due to the delay the other roughly synchronized Type II, Type III or IV user has.

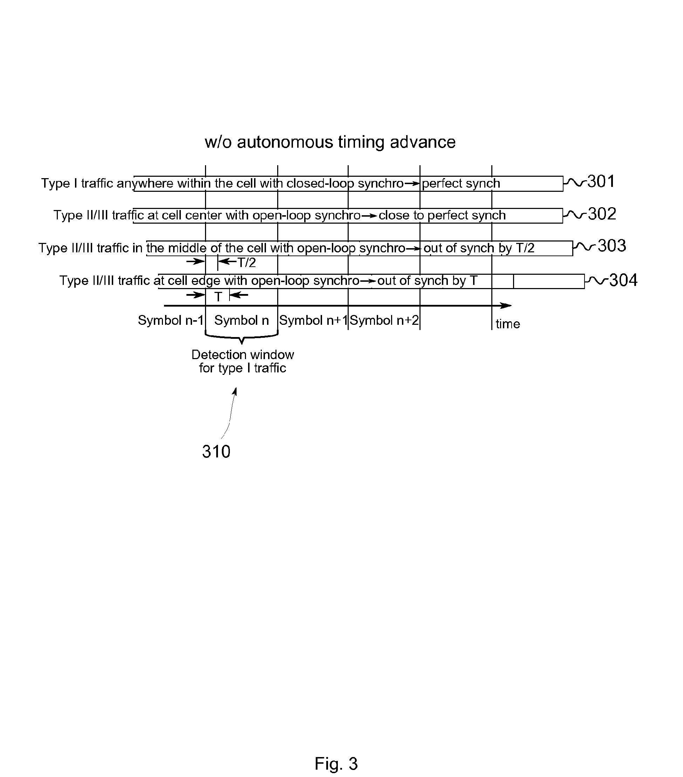

The range of delays the interfering Type II to IV transmissions have relative to the synchronous Type I transmissions is positive within $[0 \ldots T_{max}]$. Thereby a delay of 0 corresponds to cell center devices with almost no propagation delay between mobile terminal and base station, while a delay of $T_{max}$ corresponds to cell edge devices with maximal propagation delay between mobile terminal and base station. This is illustrated in Fig. 3.

Fig. 3 illustrates relative delays between Type I traffic 301 and Type II, III, IV traffic originating from different positions of a mobile terminal within a cell area. Reference numeral 302 denotes Type II, III, IV traffic originating from a mobile terminal which is located close to the base station, i.e., close to the cell center. Therefore the traffic 302 will experience almost no propagation or round trip delay between the mobile terminal and the base station and will hence be almost perfectly synchronized to the Type I traffic 301. Reference numeral 303 denotes Type II, III, IV traffic originating from a mobile terminal which is located half way from the cell center to a cell edge. Therefore the traffic 303 will experience a propagation or round trip delay between the mobile terminal and the base station corresponding to $T_{max}/2$ and will hence be out of synch to the Type I traffic 301 by $T_{max}/2$ with respect to a detection window 310 for the Type I traffic if no timing advance is applied to the traffic 303. Reference numeral 304 denotes Type II, III, IV traffic originating from a mobile terminal which is located at the cell edge. Therefore the traffic 304 will experience a propagation or round trip delay between the mobile terminal and the base station corresponding to $T_{max}$ and will hence be out of synch to the Type I traffic 301 by $T_{max}$ with respect to the detection window 310 if no timing advance is applied to the traffic 304.

Turning back to Fig. 2 it may be seen that it is better to have roughly open-loop synchronized Type II, III or IV traffic delayed relative to the closed-loop synchronized Type I traffic between $[-T_{max}/2, T_{max}/2]$ compared to a relative delay between $[0, T_{max}]$ as has been described referring to Fig. 3. For $T_{max} = 40$ (see upper Fig. 2) difference is about 2 dB with respect to the peak 202. In case of $T_{max} = 80$ (see lower Fig. 2) we have nearly 4 dB with respect to the peak 204.

Embodiments propose means to shift the disadvantageous delay relative ranges from $[0, T_{max}]$ to more advantageous delay ranges. The skilled person will understand that embodiments are particularly well suited for FBMC and UFMC based communications. That is to say, embodiments may apply to communication systems not using a cyclic prefix, but may be used in conjunction with FBMC or UFMC solutions instead, which are strong candidates for future generations of wireless networks. Here, detection distortions at the base station arising from relative delays between user uplink transmissions are symmetric to the case of no delay in contrast to systems applying a cyclic prefix, as outlined in Fig. 2. However, note that embodiments are not limited to FBMC or UFMC communication systems.

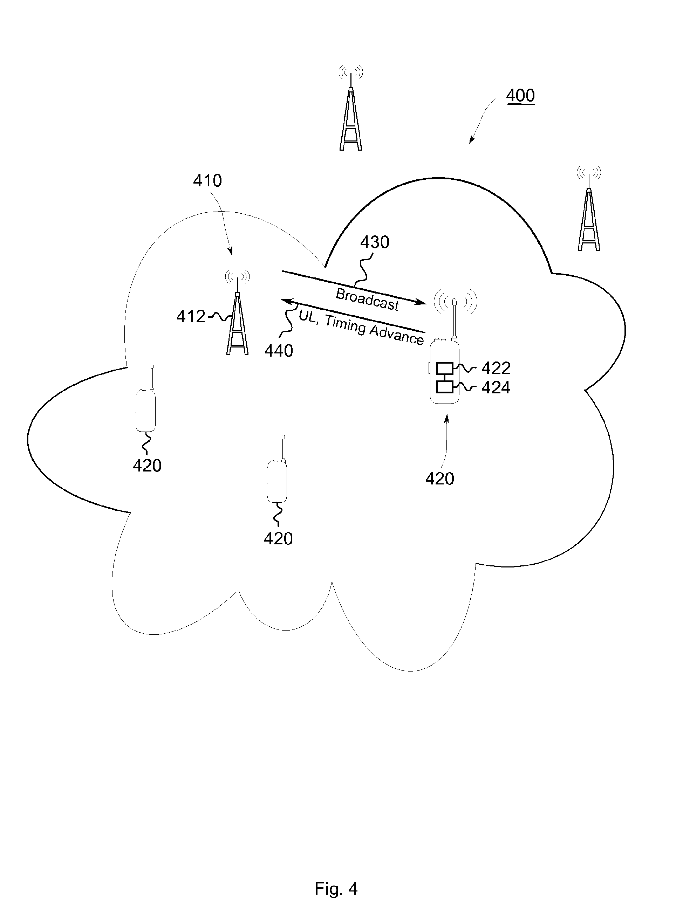

Turning now to Fig. 4, it is shown a mobile communication system 400 comprising one or more base stations 410, which are serving one or more mobile terminals 420, respectively. That is to say, a base station 410 may establish a cell of the mobile communication system 400.

According to embodiments the base station 410 comprises a transmitter 412 which is configured to transmit or broadcast a broadcast signal 430 to the mobile terminals 420 associated or attached to the base station 410 or the cell, respectively. Thereby the broadcast signal 430 may comprise information from which a conclusion on a size of the cell may be derived. On the other side, a mobile terminal 420 comprises an estimator 422 which is configured to determine (e.g. by means of adequate circuitry and/or programming), at the mobile terminal 420 and based on the broadcast signal 430, an estimate of a timing advance for a (uplink) transmission 440 from the mobile terminal 420 to the base station 410. Further, the mobile terminal 420 may comprise a transmitter 424 which is configured to apply the determined estimate of the timing advance to the uplink transmission 440 transmission from the mobile terminal 420 to the base station 410. The timing advance or the timing advance value may be used to compensate for signal propagation or round trip delay between the mobile terminal 420 and the base station 410. Due to this compensation applied at open-loop synchronized mobile terminals 420 a better synchronization between the uplink signals of open- and closed loop synchronized mobile terminals may be achieved.

For example, the broadcast signal 430, which may be broadcasted on a regular basis (e.g. once every second, every few hundreds of ms), may carry a cell size for the cell, the cell size being selected from a predefined set of different cell sizes. The cell sizes from the set may have associated therewith or correspond to a corresponding maximum signal propagation or round trip delay $T_{max}$ for the respective cell. In this case the estimator 422 may be operable to determine the estimate of the timing advance based on the maximum signal propagation delay $T_{max}$ which may be derived from the conveyed cell size. In such embodiments the broadcast signal 430 may comprise information on a type of the cell, such as, e.g. "small metro cell", "small urban macro", "medium rural macro", "big rural macro", etc. This information may e.g. be encoded by an adequate number of bits conveyed to the mobile terminals 420 associated to the cell by the broadcast signal 430. From this cell size information a mobile terminal 420 may derive an estimate of a diameter or radius of the cell and, e.g. using the speed of light c, an estimate of the maximum signal propagation delay or round trip delay $T_{max}$ for the cell. From this a mean or weighted mean round trip delay, i.e. timing advance, for said cell may be derived. Also, $T_{max}$ may be guessed via a simple rule of thumb, e.g. using a look-up table according definitions of the International Telecommunication Union (ITU) regarding typical cell sizes. Naturally, the estimated $T_{max}$ and the actual one may deviate to some extent. However, as long as each Type II, III, IV mobile terminal is applying the same timing advance, the overall system may be improved in terms of interference to Type I traffic.

That is to say, the estimator 422 may be operable or configured to determine, based on the obtained cell size information, the estimate of the timing advance $TA$ based on a maximum signal propagation delay or round trip delay $T_{max}$ for the cell served by the base station. Thereby the maximum round trip delay $T_{max}$ is directly proportional to the size of the cell. For example, each cell size from a set of possible cell sizes may have associated therewith a maximum round trip delay $T_{max}$, wherein the association may take place via a lookup-table implemented in the mobile terminal. Having found the maximum round trip delay $T_{max}$ for the reported cell size, the estimator 422 may be operable or configured to determine the estimate of the timing advance $TA$ according to $x < TA < T_{max}$, with $x \leq T_{max}/2$, independent from an actual position of the mobile terminal 420 in the cell. In some embodiments the estimator may determine the estimate $TA$ according to $TA = T_{max}/2$ (independent from the actual position of the mobile terminal 420 in the cell), which corresponds to half of the maximum round trip delay $T_{max}$. In such a case the range of delays at the base station relative to precisely synchronized Type I UL transmissions (based on closed-loop synchronization procedures) will approximately be within $[-T_{max}/2 ... T_{max}/2]$, with $T_{max}$ being the estimated highest occurring round trip time occurring within the cell. In other embodiments $TA$ may be chosen smaller than $T_{max}/2$, e.g. $T_{max}/3$, in case the mobile terminals of a cell are all distributed close to the cell center, for example.

As there may be still many Type I mobile terminals using closed-loop synchronization (e.g. smart phones, tablet, i.e. Type I bit pipe traffic) the base station 410 may be aware of the range of time delays occurring within its coverage area. So, it is possible to broadcast the highest measured timing delay for closed-loop synchronized mobile terminals, for example, once every second, every few hundreds of ms. Alternatively, to filter out spikes, an xx percentile (xx = 90, 95 ...) may be broadcasted. Thereby the percentile is a measure used in statistics indicating the value below which a given percentage of observations in a group of observations fall. For example, the 90th percentile is the Type I timing advance value below which 90 percent of the Type I closed-loop synchronization observations may be found. That is to say, additionally or alternatively the broadcast signal 430 may carry a quantity which is indicative of a maximum signal propagation delay measured by the base station 410 during closed-loop synchronization procedures of the base station with Type I mobile terminals served by the cell. Such a maximum signal propagation delay or round trip delay may hence stem from uplink random access procedures of Type I mobile terminals in the cell, wherein exact timing advance measurements of the base station 410 are communicated from the base station 410 to the Type I mobile terminals during the respective closed-loop random access procedures. The highest or largest measured TA value for said cell may then be broadcasted via signal 430 in order to allow for improved open-loop synchronization procedures for Type II, III, IV mobile terminals 420. For such an open-loop synchronization procedure the mobile terminal's estimator 422 may be operable to determine the estimate of the timing advance based on said maximum measured signal propagation delay or TA value, e.g. according to $x < TA < T_{max}$ ($x < T_{max}/2$) or $TA = T_{max}/2$ (independent from the actual position of the mobile terminal 420 in the cell).

According to further embodiments the base station 410 may additionally or alternative broadcast its transmission power every once in a while (e.g. once every second, every few hundreds of ms). By measuring the receive power at the mobile terminal 420, the mobile terminal 420 is able to estimate a Path Loss (PL) between the base station 410 and the mobile terminal 420. With the help of the pass loss the mobile terminal 420 is able to roughly estimate the round trip time and hence the timing advance value for its transmissions. By doing so it is able to even refine the above autonomous timing advance mechanism. Hence, the broadcast signal 430 may carry a quantity indicative of a transmission power of the base station 410 used for the broadcast signal 430. In such a case the mobile terminal's estimator 422 may be operable to determine the estimate of the timing advance based on a difference between the transmission power and a receive power of the broadcast signal 430 measured at the mobile terminal 420. The mobile terminal's transceiver circuitry may be used to measure the receive power.

A course example: The path loss attenuation in decibel (dB) follows at least the Free Space Path Loss (FSPL) according to

$$\mathrm{FSPL(dB)} = 20\log_{10}(d) + 20\log_{10}(f) + 92.45 \tag{3}$$

with d and $f$ measured in km and GHz, respectively. So transmit power minus receive power level provides the attenuation FSPL. Entering said attenuation FSPL into Eq. (3) provides a certain minimum distance d for a given system frequency $f$. Using the speed of light c, a certain minimum propagation time delay between the base station 410 and the mobile terminal 420 follows from this. The estimated round trip delay or timing advance is twice this number, which now can be used as a transmission timing offset correction, improving the alignment of receive signals from different mobile terminals 420 at the base station 410.

Instead of the above free space propagation model, a more typical representative path loss model can be used (and stored in the mobile terminal 420) in order to minimize the timing mismatch. Examples of such outdoor path loss or propagation models are the known ground reflection (2-ray) model, Okumura model, Hata model, etc.

Additionally or alternatively, a channel estimator of the mobile terminal 420 may detect whether the mobile terminal 420 is in Line-of-Sight (LoS) conditions, for example, by detecting a certain Rician characteristic, and thus a fading plus a non-fading component and/or a comparatively frequency-flat and time stable behaviour. Rician fading is a stochastic model for radio propagation anomaly caused by partial cancellation of a radio signal by itself-the signal arrives at the receiver by several different paths (hence exhibiting multipath interference), and at least one of the paths is changing (lengthening or shortening). Rician fading occurs when one of the paths, typically a line of sight signal, is much stronger than the others. In Rician fading, the amplitude gain is characterized by a Rician distribution. In that case the mobile terminal 420 may use the above FSPL equation for the determination of the distance d and hence the required timing advance value. Otherwise, in non-line-of-sight conditions (e.g. Rayleigh fading), an appropriate path loss model may be used based on measurements and/or simulation. That is to say, the estimator 422 may be configured to determine the estimate of the mobile terminal's timing advance based on a measured channel condition, wherein the channel condition is indicative of one of a plurality of path loss or propagation models. The selected propagation model can then be used to determine the mobile terminal's timing advance estimate, as has been explained above.

According to some embodiments the estimator 422 may alternatively or additionally be operable to determine the estimate of the timing advance based on received handover measurement signals of a cell served by the base station and one or more neighboring cells. Handover measurements may be performed by the mobile terminal 420 based on broadcast signals from the base station 410 and neighboring base stations. In embodiments the mobile terminal does not have to execute an actual handover procedure in order to obtain those measurement results. Instead, just the analysis of receive power levels based on the transmitted reference symbols (also known as pilot or training symbols), which are known for the different cells, are sufficient.

In one embodiment the mobile terminal 420 may use its results from handover measurements where the different receive power levels of different cells are available. In case the serving base station 410 or cell is very strong relative to its neighboring base stations, a cell inner location can be implied and thus a small propagation delay or timing advance. Otherwise, if the receive power level of the serving cell is close (or equal) to a neighbour cell, a cell outer location can be implied and thus a large propagation delay or timing advance. A lookup table derived from prior measurements or simulations can provide appropriate numbers. Additionally or alternatively, as described above, rough estimates on distances d can be obtained from some adequate path loss model. Hence, the mobile terminal's estimator 422 may be operable to determine a timing advance estimate corresponding to an inner cell position of the mobile terminal 420 if a receive power level of the cell served by the base station 410 is larger than a receive power level of the one or more neighboring cells. On the other hand, the estimator 422 may be operable to determine a timing advance estimate corresponding to a cell edge position of the mobile terminal 420 if the receive power level of the cell served by the base station 410 is smaller than or equals a receive power level of a neighboring cell within a predefined tolerance range. Additionally, to avoid the case that a mobile terminal close to the base station is receiving a signal from two equally strong sectors, the mobile terminal may check whether the neighbor cell is indeed transmitting from a different site than the serving cell. This can either be done using available signaling information, or based on receiver techniques like a direction-of-arrival estimation, using algorithms like ESPRIT (Estimation of Signal Parameters via Rotational Invariance Technique) or MUSIC (Multiple Signal Classifier), in the case the mobile terminal is equipped with multiple antennas. Signals from neighbor cells coming from the same direction imply the same base station site (with a different cell sector) and are excluded in the comparison. Only signals from cells at different sites are used for this kind of timing advance estimation.

In case the mobile terminal 420 is moving through the cell it can alternatively or additionally store the results of different handover measurements at different locations. In particular, the mobile terminal could store received powers and the relative timings of received broadcast signals from different cells in order to get insights on the cell size of the cell it is currently associated with. Hence, the mobile terminal's estimator 422 may be operable to determine the estimate of the timing advance based on relative timings between the received handover measurement signals.

For example, a the mobile terminal 420 may connect to the network when it is located at an inner cell position and there has a first handover measurement available, including the relative propagation delays from the received broadcast signals from different cells, e.g. containing reference / synchronization sequences from neighbour cells. When the mobile terminal 420 now moves to the cell edge and has a second handover measurement available at this cell edge position, it can check how the relative propagation delays between the received broadcast signals from the different cells have changed. In a set of strong neighbour cells, the one relative propagation delay which has changed most gives an indication on the propagation delay to the serving cell. Path loss relationships, e.g. from equation (3) or the alternatives provided in the text below, allow to translate again receive power levels and their differences into geometrical relationships. The availability of multiple measurement points can increase the accuracy of the result and can even enable the possibility for triangulation. Furthermore, if the mobile started in closed-loop synchronization, as it e.g. had to transmit type I traffic, and now continues in open-loop synchronization using embodiments, the actual change in timing advance can be tracked. As long as the receive power levels of the neighbour cells remain the same across different handover measurements, the same timing advance as in the closed-loop synchronization can be reused. (Additionally, the mobile terminal can estimate the Doppler shift and if it is close to zero, past closed-loop timing advance results can be used.). Thus, observed propagation timing delay distances from past and current handover measurements allow to infer on the distance to the serving base station 410, e.g. in combination with the prior explained embodiments, and thus on the appropriate transmission timing offset correction.

Any weighted combination of two or more of the above listed embodiments may improve the accuracy of the total timing correction result.

The skilled person will appreciate that the mobile terminal 420 may perform a corresponding method, the method comprising determining, at the mobile terminal 420, an estimate of a timing advance for a transmission from the mobile terminal 420 to the base station 410 based on the broadcast signal 430.

Embodiments may further provide a computer program having a program code for performing one of the above method, when the computer program is executed on a computer or processor. A person of skill in the art would readily recognize that steps of various above-described methods may be performed by programmed computers. Herein, some embodiments are also intended to cover program storage devices, e.g., digital data storage media, which are machine or computer readable and encode machine-executable or computer-executable programs of instructions, wherein the instructions perform some or all of the acts of the above-described methods. The program storage devices may be, e.g., digital memories, magnetic storage media such as magnetic disks and magnetic tapes, hard drives, or optically readable digital data storage media. The embodiments are also intended to cover computers programmed to perform the acts of the above-described methods or (field) programmable logic arrays ((F)PLAs) or (field) programmable gate arrays ((F)PGAs), programmed to perform the acts of the above-described methods.

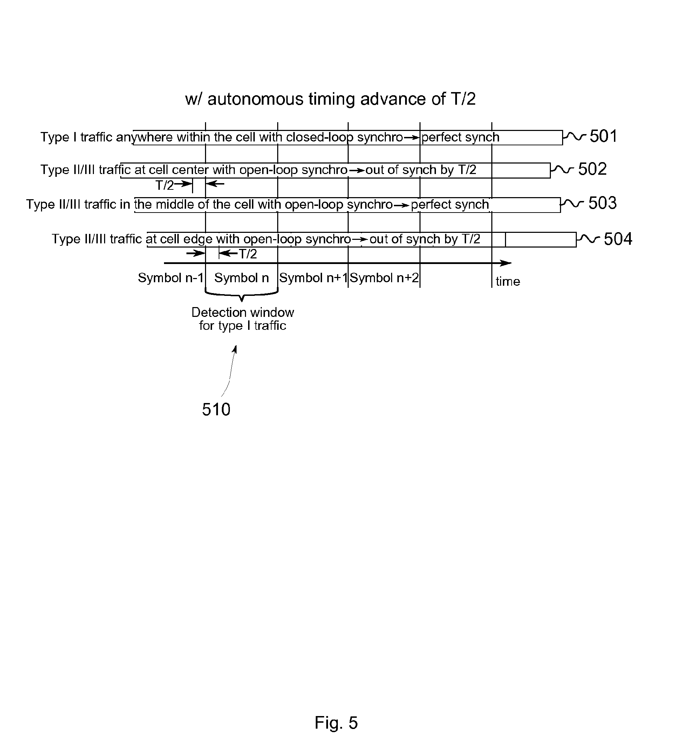

To summarize, an idea of embodiments is to enable the Type II, Type III and Type IV mobile terminal 420 to roughly estimate $T_{max}$ and make use of the estimate to autonomously introduce, i.e. without interaction with the base station 410, a timing advance. That is to say, the mobile terminals (Type II, III and IV) may roughly synchronize themselves via DL measurements. Then, by applying autonomously a timing advance of e.g. $T_{max}/2$ the interference to Type I traffic may be minimized. Various ways to obtain $T_{max}$ are available. If every type II, III and IV mobile terminal 420 autonomously applies a timing advance of $T_{max}/2$ according to some embodiments, the occurring delay range relative to the Type I transmissions is within [$-T_{max}/2$ ... $+T_{max}/2$]. This can be seen from Fig. 5.

Fig. 5 illustrates relative delays between Type I traffic 501 and Type II, III, IV traffic originating from different positions of a mobile terminal within a cell area. Reference numeral 502 denotes Type II, III, IV traffic originating from a mobile terminal 420 which is located close to the base station 410, i.e., close to the cell center. Therefore the traffic 502 will experience almost no propagation or round trip delay between the mobile terminal 420 and the base station 410. However, applying a timing advance of $T_{max}/2$ the traffic 502 will be out of synch to the Type I traffic 501 by $-T_{max}/2$ with respect to a detection window 510 for the Type I traffic. Reference numeral 503 denotes Type II, III, IV traffic originating from a mobile terminal 420 which is located half way from the cell center to a cell edge. Therefore the traffic 503 will experience a propagation or round trip delay between the mobile terminal and the base station corresponding to $T_{max}/2$. Applying a timing advance of $T_{max}/2$ the traffic 503 will be almost perfectly synchronized to the Type I traffic 501 with respect to the detection window 510. Reference numeral 504 denotes Type II, III, IV traffic originating from a mobile terminal 420 which is located at the cell edge. Therefore the traffic 504 will experience a propagation or round trip delay between the mobile terminal and the base station corresponding to $T_{max}$ and, applying a timing advance of $T_{max}/2$, will hence be out of synch to the Type I traffic 301 by $+T_{max}/2$ with respect to the detection window 510. For Filter Bank Multi-Carrier (FBMC) or UFMC based systems this situation is better than that of Fig. 3. The situation of Fig. 5 may even be optimal with respect to the amount of distortion generated, if we assume propagation delays to occur uniformly distributed between 0 and $T_{max}$ over all possible locations within the cell.

If every mobile terminal 420 autonomously applies a timing advance of $T'$, with $T_{max} > T' > T_{max}/2$), the occurring delay range is within [$-T'$ ... $-T'+T_{max}$] ($-T'$: cell center mobile terminals, $-T'+T_{max}$: cell edge mobile terminals, 0: location of devices having 0 delay is shifted more into the direction of the cell edge). In this way non-uniform distribution of occurring propagation delays may be taken into account, assuming mobile terminals being uniformly distributed within a cell being a segment of a circle, the distribution of the distances of the mobile terminals to the base station is linear. Propagation delay is to some extend related to this distance.

Additionally or alternatively to the common timing advance of $T_{max}/2$ and $T'$, respectively, the actually applied timing advance per user may be refined depending on the actual distance of the mobile terminal 420 to the base station 410. Various means to estimate this distance have been described.

Embodiments may enable a reduction of performance degradation closed-loop synchronized data transmissions are suffering, if additionally roughly open-loop synchronized transmissions are present. Further, embodiments may enable fast open-loop synchronization with low latency and almost no messaging overhead.

The description and drawings merely illustrate the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

Functional blocks denoted as "means for ..." (performing a certain function) shall be understood as functional blocks comprising circuitry that is configured to perform a certain function, respectively. Hence, a "means for s.th." may as well be understood as a "means configured to or suited for s.th.". A means configured to perform a certain function does, hence, not imply that such means necessarily is performing the function (at a given time instant).

Functions of various elements shown in the figures, including any functional blocks labeled as "means", "means for providing a sensor signal", "means for generating a transmit signal.", etc., may be provided through the use of dedicated hardware, such as "a signal provider", "a signal processing unit", "a processor", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods.

Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some embodiments a single act may include or may be broken into multiple sub acts. Such sub acts may be included and part of the disclosure of this single act unless explicitly excluded.

**Claims**

1.  A mobile terminal (420), comprising:

    an estimator (422) operable to determine, at the mobile terminal (420), an estimate of a timing advance ($TA$) for a transmission from the mobile terminal (420) to a base station (410) based on a broadcast signal (430) from said base station (410).

2.  The mobile terminal (420) of claim 1, wherein the estimator (422) is operable to determine the estimate of the timing advance ($TA$) based on a maximum signal propagation delay $T_{max}$ for a cell served by the base station (410), wherein the estimate ($TA$) corresponds to x < $TA$ < $T_{max}$, with $x \le T_{max}/2$.

3.  The mobile terminal (420) of claim 2, wherein the estimator (422) is operable to determine the estimate $TA$ according to $TA = T_{max}/2$.

4.  The mobile terminal (420) of claim 1, wherein the broadcast signal (430) is indicative of a size of a cell served by the base station (410).

5.  The mobile terminal (420) of claim 4, wherein the broadcast signal (430) carries a cell size for the cell, the cell size being selected from a predefined set of different cell sizes, wherein the cell sizes from the set have associated therewith a corresponding maximum signal propagation delay for the respective cell,
    wherein the estimator (422) is operable to determine the estimate of the timing advance (TA) based on the maximum signal propagation delay for the cell.

6.  The mobile terminal (420) of claim 4, wherein the broadcast signal (430) carries a quantity indicative of a maximum signal propagation delay measured by the base station (410) during closed-loop synchronization procedures of the base station (410) with other mobile terminals served by the cell,
    wherein the estimator (422) is operable to determine the estimate of the timing advance ($TA$) based on the maximum measured signal propagation delay.

7. The mobile terminal (420) of claim 4, wherein the broadcast signal (430) carries a quantity indicative of a transmission power of the base station (410) used for the broadcast signal (430), wherein the estimator (422) is operable to determine the estimate of the timing advance based on a difference between the transmission power and a receive power of the broadcast signal measured at the mobile terminal (420).

8. The mobile terminal (420) of claim 1, wherein the estimator (422) is operable to determine the estimate of the timing advance based on received handover measurement signals of a cell served by the base station (410) and one or more neighboring cells.

9. The mobile terminal (420) of claim 8, wherein the estimator (422) is operable to determine a timing advance estimate corresponding to an inner cell position of the mobile terminal (420) if a receive power level of the cell served by the base station (410) is larger than a receive power level of the one or more neighboring cells.

10. The mobile terminal (420) of claim 8, wherein the estimator (422) is operable to determine a timing advance estimate corresponding to a cell edge position of the mobile terminal (420) if the receive power level of the cell served by the base station (410) is smaller than or equals a receive power level of a neighboring cell within a predefined tolerance range.

11. The mobile terminal (420) of claim 8, wherein the estimator (422) is operable to determine the estimate of the timing advance based on relative timings between the received handover measurement signals.

12. The mobile terminal (420) of claim 1, wherein the mobile terminal (420) is operable to communicate with the base station (410) using a Filter Bank Multi-Carrier (FBMC) technique.

13. A method for a mobile terminal (420), comprising:

determining, at the mobile terminal (420), an estimate of a timing advance ($TA$) for a transmission from the mobile terminal (420) to a base station (410) based on a broadcast signal (430) from said base station (410).

14. A base station (410) for cell of a cellular communication system, the base station comprising:

a transmitter (412) operable to broadcast a broadcast signal (430) comprising information indicative of a size of the cell.

15. The base station (410) of claim 14, wherein the information comprises one of the group of
a cell size for the cell, the cell size being selected from a predefined set of different cell sizes, wherein the cell sizes from the set have associated therewith a corresponding maximum signal propagation delay for the respective cell, or
a maximum signal propagation delay $(T_{max})$ measured by the base station during closed-loop synchronization procedures of the base station (410) with mobile terminals served by the cell, or
a quantity indicative of a transmission power of the base station (410) used for the broadcast signal (430).


**Amended claims in accordance with Rule 137(2) EPC.**

1. A mobile terminal (420), comprising:

an estimator (422) operable to determine, at the mobile terminal (420), an estimate of a timing advance ($TA$) for a transmission from the mobile terminal (420) to a base station (410) based on a broadcast signal (430) from said base station (410), wherein the estimator (422) is operable to determine the estimate of the timing advance ($TA$) based on a maximum signal propagation delay $T_{max}$ for a cell served by the base station (410) derived from the broadcast signal (430), wherein the estimate ($TA$) corresponds to $x < TA < T_{max}$, with $x \leq T_{max}/2$.

2. The mobile terminal (420) of claim 1, wherein the estimator (422) is operable to determine the estimate of the timing advance ($TA$) independent from an actual position of the mobile terminal (420) in the cell.

3. The mobile terminal (420) of claim 2, wherein the estimator (422) is operable to determine the estimate $TA$ according to $TA = T_{max}/2$.

4. The mobile terminal (420) of claim 1, wherein the broadcast signal (430) is indicative of a size of a cell served by the base station (410).

5. The mobile terminal (420) of claim 4, wherein the broadcast signal (430) carries a cell size for the cell, the cell size being selected from a predefined set of different cell sizes, wherein the cell sizes from the set have associated therewith a corresponding maximum signal propagation delay for the respective cell, wherein the estimator (422) is operable to determine the estimate of the timing advance ($TA$) based on the maximum signal propagation delay for the cell.

6. The mobile terminal (420) of claim 4, wherein the broadcast signal (430) carries a quantity indicative of a maximum signal propagation delay measured by the base station (410) during closed-loop synchronization procedures of the base station (410) with other mobile terminals served by the cell, wherein the estimator (422) is operable to determine the estimate of the timing advance ($TA$) based on the maximum measured signal propagation delay.

7. The mobile terminal (420) of claim 4, wherein the broadcast signal (430) carries a quantity indicative of a transmission power of the base station (410) used for the broadcast signal (430), wherein the estimator (422) is operable to determine the estimate of the timing advance based on a difference between the transmission power and a receive power of the broadcast signal measured at the mobile terminal (420).

8. The mobile terminal (420) of claim 1, wherein the estimator (422) is operable to determine the estimate of the timing advance based on received handover measurement signals of a cell served by the base station (410) and one or more neighboring cells.

9. The mobile terminal (420) of claim 8, wherein the estimator (422) is operable to determine a timing advance estimate corresponding to an inner cell position of the mobile terminal (420) if a receive power level of the cell served by the base station (410) is larger than a receive power level of the one or more neighboring cells.

10. The mobile terminal (420) of claim 8, wherein the estimator (422) is operable to determine a timing advance estimate corresponding to a cell edge position of the mobile terminal (420) if the receive power level of the cell served by the base station (410) is smaller than or equals a receive power level of a neighboring cell within a predefined tolerance range.

11. The mobile terminal (420) of claim 8, wherein the estimator (422) is operable to determine the estimate of the timing advance based on relative timings between the received handover measurement signals.

12. The mobile terminal (420) of claim 1, wherein the mobile terminal (420) is operable to communicate with the base station (410) using a Filter Bank Multi-Carrier (FBMC) technique.

13. A method for a mobile terminal (420), comprising:

determining, at the mobile terminal (420), an estimate of a timing advance ($TA$) for a transmission from the mobile terminal (420) to a base station (410) based on a broadcast signal (430) from said base station (410), wherein the estimate of the timing advance ($TA$) is determined based on a maximum signal propagation delay $T_{max}$ for a cell served by the base station (410) derived from the broadcast signal (430), wherein the estimate ($TA$) corresponds to $x < TA < T_{max}$, with $x \leq T_{max}/2$.

14. A base station (410) for cell of a cellular communication system, the base station comprising:

a transmitter (412) operable to broadcast a broadcast signal (430) comprising information indicative of a size of the cell.

15. The base station (410) of claim 14, wherein the information comprises one of the group of
a cell size for the cell, the cell size being selected from a predefined set of different cell sizes, wherein the cell sizes from the set have associated therewith a corresponding maximum signal propagation delay for the respective cell, or
a maximum signal propagation delay ($T_{max}$) measured by the base station during closed-loop synchronization procedures of the base station (410) with mobile terminals served by the cell, or
a quantity indicative of a transmission power of the base station (410) used for the broadcast signal (430).

Fig. 1

UFMC, sideband attenuation 40 dB, filterlength 50 samples

UFMC, sideband attenuation 40 dB, filterlength 50 samples

Fig. 2

## w/o autonomous timing advance

Type I traffic anywhere within the cell with closed-loop synchro→perfect synch ~301

Type II/III traffic at cell center with open-loop synchro→close to perfect synch ~302

Type II/III traffic in the middle of the cell with open-loop synchro→out of synch by T/2 ~303
←T/2

Type II/III traffic at cell edge with open-loop synchro→out of synch by T ~304
T ←

| Symbol n-1 | Symbol n | Symbol n+1 | Symbol n+2 | | time |

Detection window
for type I traffic

310

Fig. 3

Fig. 4

## w/ autonomous timing advance of T/2

Type I traffic anywhere within the cell with closed-loop synchro→perfect synch     ╰╲╱ 501

Type II/III traffic at cell center with open-loop synchro→out of synch by T/2     ╰╲╱ 502

Type II/III traffic in the middle of the cell with open-loop synchro→perfect synch     ╰╲╱ 503

Type II/III traffic at cell edge with open-loop synchro→out of synch by T/2     ╰╲╱ 504

| Symbol n-1 | Symbol n | Symbol n+1 | Symbol n+2 | time |

Detection window
for type I traffic

510

Fig. 5

EP 2 827 660 A1

# EUROPEAN SEARCH REPORT

Application Number

EP 13 30 6021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | INTERDIGITAL COMMUNICATIONS ET AL: "Discussion on Timing Advance calculation using time difference measurement", 3GPP DRAFT; R1-112234 IDCC AUTONOMOUS TA FOR R11 INTER-BAND CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537396, | 1,13 | INV. H04W56/00 |
| Y | * paragraph [0002] * * paragraph [3.1.4] * | 2 | |
| Y | ALCATEL-LUCENT ET AL: "Analysis of impact of cell range extension", 3GPP DRAFT; R1-094601, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389012, * page 2 * | 2 | TECHNICAL FIELDS SEARCHED (IPC) H04W |
| A | MONOWAR HASAN ET AL: "Random access for machine-to-machine communication in LTE-advanced networks: issues and approaches", IEEE COMMUNICATIONS MAGAZINE, IEEE SERVICE CENTER, PISCATAWAY, US, vol. 51, no. 6, 1 June 2013 (2013-06-01), XP011514638, ISSN: 0163-6804, DOI: 10.1109/MCOM.2013.6525600 * page 1 - page 5 * | 1-3,13 | |

The present search report has been drawn up for all claims

| Place of search | Date of completion of the search | Examiner |
|---|---|---|
| Munich | 19 December 2013 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches
Patentamt

European
Patent Office

Office européen
des brevets

**Application Number**

EP 13 30 6021

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 13

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 13 30 6021

The Search Division considers that the present European patent application does not comply with the requirements of unity of invention and relates to several inventions or groups of inventions, namely:

```
1. claims: 1-3, 13

      The mobile terminal determines the TA to be half of the
      maximum signal
                          ---

2. claims: 4-7, 14, 15

      a base station broadcasting information indicative of a size
      of the cell
                          ---

3. claims: 8-11

      The mobile terminal determines the TA based on a received
      handover measurement
                          ---

4. claim: 12

      The mobile terminal communications with the base station
      based on a Filter Bank Multi-Carrier technique FBMC
                          ---
```